# EUROPEAN PATENT SPECIFICATION

(11) **EP 1 145 452 B1**
(45) Date of publication and mention of the grant of the patent: **21.08.2002**
(21) Application number: 00904200.3
(22) Date of filing: 04.01.2000
(51) Int. Cl.: H04B 1/40

(54) **FULL-DUPLEX RADIO-COMMUNICATION DEVICE WITH HALF-DUPLEX FUNCTIONALITY**
VOLLDUPLEXFÄHIGES FUNKÜBERTRAGUNGSSYSTEM MIT HALBDUPLEXFUNKTION
DISPOSITIF DE COMMUNICATION RADIO EN DUPLEX AVEC FONCTIONNALITE SEMI-DUPLEX

(30) Priority: 20.01.1999 US 234191
(43) Date of publication of application: 17.10.2001
(73) Proprietor: Ericsson Inc., Research Triangle Park, N.C. 27709 (US)
(72) Inventor: SCHMIDT, Paul, Forest, VA 24551 (US); PAPPAS, Konstantinos, Lynchburg, VA 24501 (US)
(74) Representative: Hedman, Anders
(86) International application number: US0000119
(87) International publication number: WO00044103

(56) References cited:
- WO-A-97/28658
- US-A- 5 450 618
- US-A- 5 881 370
- PATENT ABSTRACTS OF JAPAN vol. 015, no. 078 (E-1037), 22 February 1991 (1991-02-22) & JP 02 296448 A (MITSUBISHI ELECTRIC CORP), 7 December 1990 (1990-12-07)

## Description

### FIELD OF THE INVENTION

The present invention is directed to a full-duplex radio-communication device, and in particular, a full-duplex radio-communication device adapted to also function as a half-duplex-like radio-communication device.

### BACKGROUND OF THE INVENTION

Frequently, it is necessary or desirable to include persons located at several different locations in a single conversation. This is possible to do over the public switched telephone network in the form of a conference call. In fact, the conference call is an every-day occurrence in the modern office. This is also possible to do using a radio-communication system.

One such radio-communication system useful for allowing persons at several different locations to talk to each other includes mobile radio units which all operate at the same frequency. Each radio unit has a button that enables the transmitter to broadcast whatever is spoken into a microphone associated with the unit to all units tuned to that specific frequency. When the button is released, the radio unit receives whatever communications are being broadcast on the channel to which the radio is tuned. It is not possible with such a system for more than one person to talk at a time; therefore, the problem of talking over another user does not arise.

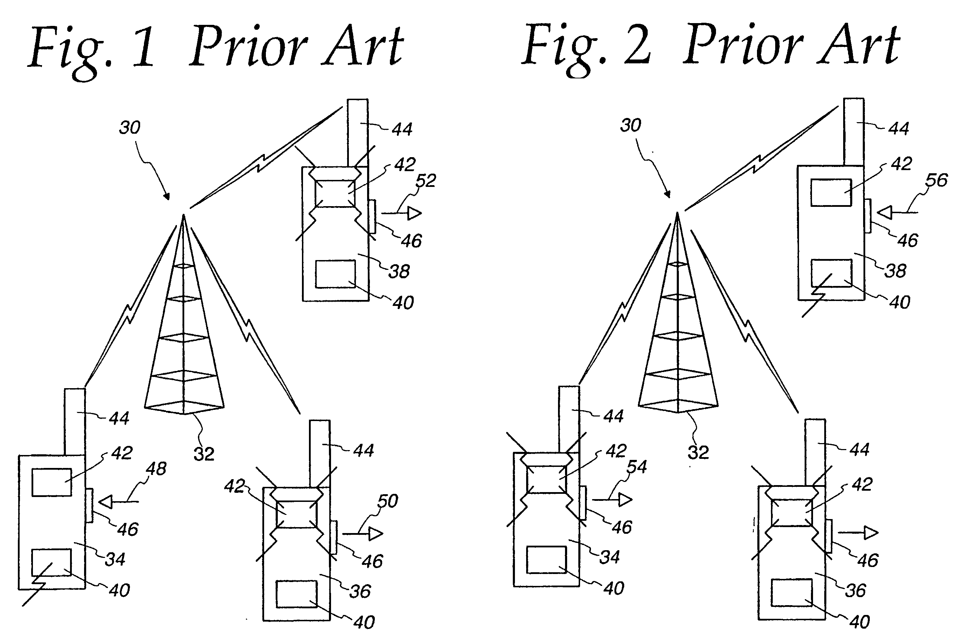

Another radio-communication system 30 useful for allowing several persons to participate in a group conversation is shown in Figs. 1 and 2. The system 30 includes a base station/repeater 32 and multiple mobile units 34, 36, 38. Each of the mobile units 34, 36, 38 includes a microphone 40, a speaker 42, an antenna 44, a push-to-talk button 46 and circuitry to transmit and receive radio-frequency signals (not shown).

The base station 32 transmits and receives control information with the mobile units 34, 36, 38 on a control channel. The base station 32 also receives messages from the mobile units 34, 36, 38 along a first (or transmit) frequency (e.g., 806 MHz), and transmits the messages to the mobile units 34, 36, 38 along a second frequency (e.g., 851 MHz).

The operation of the system 30 is now explained with reference to Figs. 1-3. In general terms, if a unit, for example the unit 34 in Fig. 1, desires to initiate a call to the other units 36, 38 of the system 30, the user depresses the button 46, as represented by an arrow 48. The buttons 46 of the other units 36, 38 are not depressed, as represented by arrows 50, 52, and these units 36, 38 are therefore in the stand-by mode.

The base station 32 receives a signal on the control channel in response to the depression of the button 46 of the unit 34. In response, the base station 32 clears the transmit frequency for the call-initiating unit to use to transmit to the base station 32. The base station 32 then sends a signal to the other units 36, 38 on the control channel, informing the units 36, 38 that a call has been initiated and that the signal will be broadcast at a given frequency (other than the control channel and the transmit frequency). During this time, no unit except for the unit 34 can transmit a message to the other units 36, 38.

Once the user of the unit 34 is done sending his message, the button 46 is released, as represented by the arrow 54 in Fig. 2. At this time, the user of one of the other units, for example the unit 38, can depress the push-to-talk button 46 of their unit to initiate a new call, as represented by an arrow 56. In response to the signal sent from the unit 38 in response to the depression of the button 46, the base station 32 again broadcasts to the other units 34, 36 on the control channel that a message is being transmitted at the second frequency.

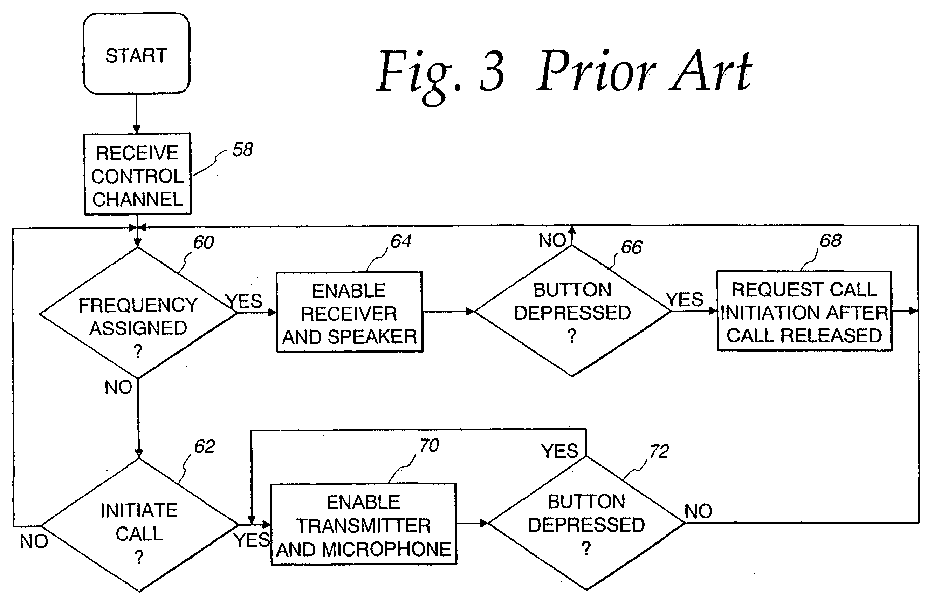

The operation of the system 30, from the point of view of one of the mobile units 34, 36, 38, is shown in Fig. 3. At a block 58, the receiver circuitry is first enabled to receive information from the base station 32 on the control channel (block 58). The unit 34, 36 or 38 then checks the control channel (block 60) to determine if a frequency has been assigned to another unit 34, 36 or 38 for the initiation of a call between the units 34, 36, 38 of the system 30. If the unit 34, 36 or 38 determines at block 60 that no frequency has been assigned, then the unit 34, 36 or 38 determines (at block 62) whether the push-to-talk button 46 has been depressed, indicating that the user desires to initiate a call. If the unit 34, 36 or 38 determines that the push-to-talk button has not been depressed, then the unit returns to block 60 and repeats the steps 60 and 62 until either a frequency is assigned or the push-to-talk button 46 is depressed.

If at block 60 it is determined that a frequency has been assigned for a call from another of the units 34, 36, 38, then at block 64 the receiver is tuned to the assigned frequency, and the speaker is coupled to the receiver. At block 66, the unit 34, 36 or 38 then determines if the push-to-talk button 46 has been depressed, indicating that the user wishes to initiate a call when the present call is completed. The system 30 does not permit the receiving units to interrupt, or talk-over, the transmitting unit's call, but if it is determined that the button 46 is depressed, then at block 68, the unit 34, 36 or 38 communicates with the base station 32 on the control channel to indicate that the unit 34, 36 or 38 wants to be the next call-initiating unit in the system 30. Either way, the method then returns to the block 60.

At some point, the unit 34, 36 or 38 will determine at block 60 that the frequency is no longer assigned. At this point, the unit 34, 36 or 38 checks again to see if the button 46 is depressed, and if so, whether the frequency has been assigned to that unit 34, 36 or 38 for transmission of the message. If both checks are affirmative, then the unit 34, 36 or 38 proceeds to enable the transmitter, and to couple the microphone 40 to the transmitter at block 70. As long as the unit 34, 36 or 38 determines that the button 46 has been depressed at block 72, the unit 34, 36 and 38 will continue to enable the transmitter and couple the microphone to the transmitter.

As it will be recognized regarding the system 30 explained above, because the transmitter and receiver are alternatively enabled and coupled to the microphone 40 and speaker 42, respectively, there is no possibility of talk-over in the system 30. The user of one of the units 34, 36, or 38 may either speak or listen, but cannot do both at the same time.

As still another example, recent advances in technology have permitted the establishment of group calls on cellular radio-telephone systems through the use of a base station with a summing conference circuit, which sums the transmissions received by the base station. It will be recognized that cellular systems conventionally operate according to a full-duplex channel arrangement, which permits each user to talk and listen at the same time. As a consequence, in a cellular radio-telephone system, unlike the radio-communication systems described above, it is possible for users to talk-over or "step on" each other, both intentionally and unintentionally (in the form of background noise, such as office or traffic noise, which is also transmitted). The talk-over problem is magnified several times over when a group cellular call is made on a cellular system using a summing conference circuit, wherein even moderate amounts of noise can become disruptive of all communications, rendering the conversation incoherent.

PCT International Publication WO 97/28658 (published August 7, 1997) discloses a method and apparatus for providing a private communication system in a public switched telephone network. In that system, push-to-talk telephones are provided, with the central network determining which of the telephones in a group call is the active user and then forwarding only the voice or data information from the active user to the other users in the group.

### SUMMARY OF THE INVENTION

According to an aspect of the present invention, a radio communication device includes a transmitter/receiver assembly adapted to transmit a first radio signal and receive a second radio signal. The radio communication device also includes a microphone and a speaker. A signal processor is included, the signal processor adapted to process the second radio signal from the transmitter/receiver assembly to generate a second sound signal at the speaker, and to process the first sound signal from the microphone to generate the first radio signal at the transmitter/receiver assembly. A mode select switch and a function select switch are also provided. The mode select switch allows for selective switching of the device between a phone mode and a radio mode. The function select switch is adapted to only operate with the device in the radio mode to selectively control the processor to process the first sound signal to generate the first radio signal including a signal representative of the first sound signal in a first functional state, and to process the first sound signal to generate the first radio signal comprising a low-noise signal non-representative of the first sound signal in a second functional state.

Further, the function select switch may selectively control the processor to process the first sound signal to generate a null sound signal in the second functional state.

Moreover, the function select switch may selectively control the processor to process the second radio signal to generate the second sound signal in the second functional state, and to disable the processor to prevent generation of the second sound signal in the first function state.

Additionally, the signal processor may include a digital signal processor adapted to process the second radio signal to generate a second intermediate digital signal and to process a first intermediate digital signal to generate the first radio signal. The signal processor may further include an analog-to-digital:digital-to-analog converter coupled to the digital signal processor and adapted to process the second intermediate digital signal to generate the second sound signal, and to process the first sound signal to generate the first intermediate digital signal.

The signal processor may further include a microprocessor coupled to the digital signal processor, the mode select switch, and the function select switch. The microprocessor is adapted to control the digital signal processor only in the radio mode to establish the first intermediate digital signal to generate the first radio signal comprising a signal representative of the first sound signal in the first functional state and to process the first intermediate digital signal to generate the first radio signal comprising a low-noise signal non-representative of the first radio signal in the second functional state.

The first and second intermediate signals may have a bit rate of 64 kilobits per second, and the first and second radio signals may have a bit rate of 8 kilobits per second.

The signal processor may process the second radio signal to generate the second sound signal and the first sound signal to generate the first radio signal in the phone mode. This processing may occur substantially simultaneously.

According to another aspect of the invention, a method of operating a radio-communication device having a speaker and a microphone includes the steps of selecting between a phone mode and a radio mode, selecting, in the radio mode only, between a first functional state and a second functional state, generating a first sound signal with the microphone, and generating a first radio signal from the first sound signal. The first radio signal is a signal representative of the first sound signal in the first functional state, and the first radio signal is a low-noise signal non-representative of the first sound signal in the second functional state. Specifically, the low-noise signal non-representative of the first sound signal may be a null sound signal.

Additionally, in the phone mode, the step of generating a first radio signal may include generating a first radio signal representative of the first sound signal from the first sound signal. The method may also include the steps of receiving a second radio signal, and generating a second sound signal from the second radio signal in the second functional state but not in the first functional state. Moreover, the method may include the step of generating a second sound signal from the second radio signal in the phone mode.

Also, the first sound signal may be an analog sound signal, and the step of generating a first radio signal from the first sound signal may include the steps of generating a first intermediate digital signal from the first sound signal, and generating a first radio signal from the first intermediate digital signal. More specifically, the step of generating a first intermediate digital signal may include the step of generating a first intermediate digital signal having a bit rate of 64 kilobits per second in the first sound signal, and the step of generating a first radio signal from the first intermediate digital signal may include the step of generating a first radio signal having a bit rate of 8 kilobits per second in the first intermediate digital signal.

The step of generating a second sound signal from the second radio signal may include the steps of generating a second intermediate digital signal from the second radio signal, and generating a second sound signal in the second intermediate digital signal, wherein the second sound signal comprises an analog sound signal. In particular, the second radio signal may include a radio signal having a bit rate of 8 kilobits per second, and the step of generating a second intermediate digital signal from the second radio signal may include generating a second intermediate signal having a bit rate of 64 kilobits per second from the second radio signal.

The step of selecting between a phone mode and a radio mode may include the step of selecting between a phone mode and a radio mode only with the device in the phone mode or the first functional state of the radio mode.

### BRIEF DESCRIPTION OF THE DRAWINGS

Fig. 1 is a schematic representation of a prior art system;
Fig. 2 is a schematic representation of the prior art system of Fig. 1 in a second configuration;
Fig. 3 is a flow chart illustrating the operation of one of the units of the prior art system shown in Figs. 1 and 2;
Fig. 4 is a schematic representation of a system according to the present invention with two units operating as cellular mobile units;
Fig. 5 is a schematic representation of the system of Fig. 4 with two units operating in a half-duplex-like mode;
Fig. 6 is a schematic representation of the system of Fig. 5 with one unit performing a half-duplex-like transmitting function;
Fig. 7 is a schematic representation of the system of Fig. 5 with a different unit performing a half-duplex-like transmitting function;
Fig. 8 is a block diagram of the circuitry of one of the mobile units of the system shown in Figs. 4-7; and
Fig. 9 is a flow chart illustrating the operation of one of the mobile units of the system shown in Figs. 4-7 in cellular and half-duplex-like modes.

### DETAILED DESCRIPTION OF THE PREFERRED EMBODIMENT

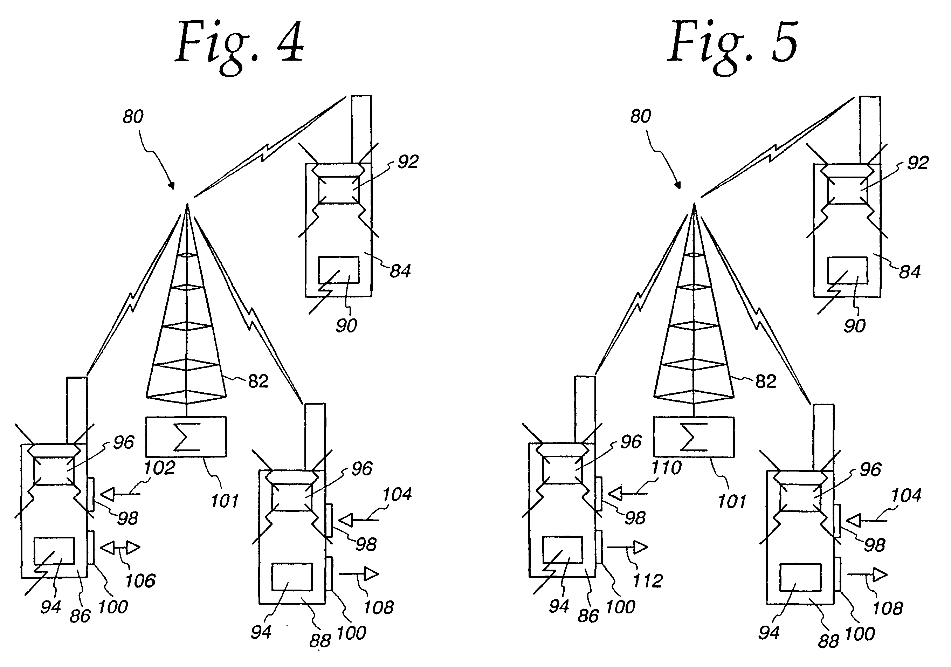

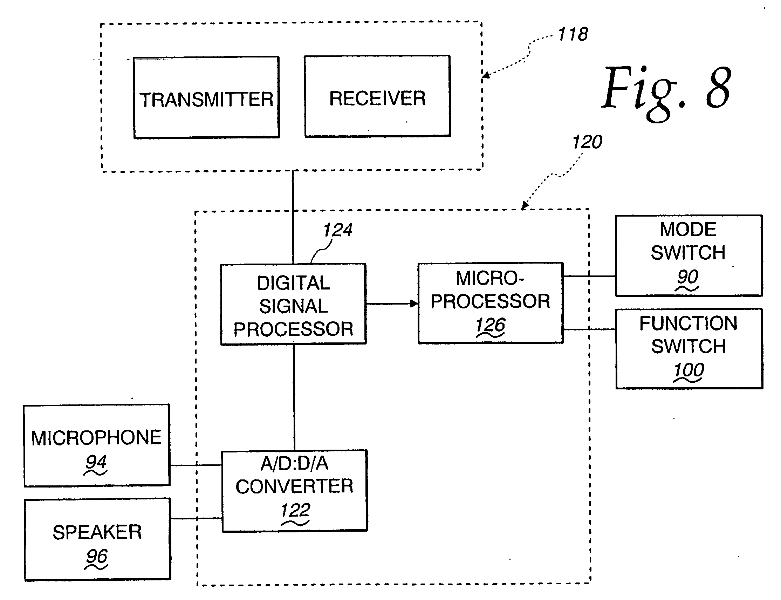

A system 80 including a base station 82, a mobile unit 84 and mobile units 86, 88 according to the present invention is shown in Fig. 4. The mobile unit 84 has a microphone 90, a speaker 92, and the circuitry required for full-duplex radio communication (not shown). The mobile units 86, 88 have a microphone 94, a speaker 96, a mode select switch or button 98, a function select switch or button 100, and circuitry required for full-duplex radio communication according to the present invention, as shown in Fig. 8 and explained in greater detail below.

The units 84, 86, 88 are all members of a call group. That is to say, all of the transmissions received by the base station from the units 84, 86, 88 are summed together at the base station 82 using a summing conference circuit 101. As a consequence, if the system 80 were composed of only units 84, any noise picked up by the microphones 90, 94 would be summed into the conversation.

However, the units 86, 88 differ from the unit 84 in that they can be switched between at least two operation modes, a phone mode and a half-duplex-like radio mode. When the units 86, 88 are in the phone mode, the units 86, 88 operate the same as the unit 84, i.e. whatever goes in the microphone 94 is transmitted to the base station 82 and whatever is received from the base station 82 is sent to the speaker 96. On the other hand, when the units 86, 88 are operating in radio mode, the units 86, 88 function in one of two states: either the signals between the microphone 94 and the transmitter are interrupted while the signals between the speaker 96 and the receiver are passed, or the signals between the speaker 96 and the receiver are interrupted while the signals between the microphone 94 and the transmitter are passed. The selection between modes is performed by depressing the mode select button 98, and the selection between functional states in the radio mode is performed by depressing the function select button 100.

As a consequence, unlike the unit 84, the units 86, 88 can control the amount of talk-over which occurs during a group call by switching from phone mode to radio mode. While in phone mode any noise which was picked up by the microphone 94 could be summed as part of the group call transmission. In radio mode, the user can ensure that the noise (intentional or unintentional) will not be summed into the group call by not depressing the function select button 100. Still, because full-duplex communication is maintained, the users of the units 86, 88 can enter the conversation at any time to make a point at an appropriate point in the conversation; it is not necessary to wait until! all other users have finished speaking. It will thus be recognized that while the greatest advantages occur when all units in a system operate according to the present invention, the advantages are not limited to such a system.

The operation of the system 80 is explained first in general terms with respect to Figs. 4-7. As discussed above, the unit 84 operates as a full-duplex phone throughout, while the units 86, 88 are shown configured in both radio and phone mode.

In Fig. 4, the unit 86 is shown in phone mode, as represented by an arrow 102 pointing in the right direction, while the unit 88 is in radio mode, as represented by an arrow 104 pointing in the left direction. The left arrow 104 represents the depression of the button 98 of the unit 88.

Because the unit 86 is in phone mode, anything picked up by the microphone 94 of the unit 86 is broadcast as part of the group call, and the received transmission from the base station 82 is sent to the speaker 96. In the phone mode, it is immaterial whether the function select button 100 is pressed or depressed, because the state of the button 100 is only relevant when the unit 86 is in radio mode. Therefore, as a representation, a double-headed arrow 106 is shown, indicating that it is immaterial whether the button 100 is depressed or released.

On the other hand, because the unit 88 is in radio mode, it is relevant whether the button 100 is depressed. If the button 100 is not depressed, as represented by an arrow 108 in Fig. 4, the unit will interrupt the signals between the transmitter (not shown) and the microphone 94. That is, while the microphone 94 of unit 88 may be generating a first signal, a second signal representative of a null signal or a signal with only a minor noise component is passed instead to the transmitter. As a consequence, there is little or no contribution to the summed group call signal from the unit 88. Meanwhile, the signal received by the receiver is allowed to pass to the speaker 96.

For any of a number of reasons, the user of unit 86 may desire to switch from phone mode to radio mode. The environmental noise, for example traffic or construction noise, might increase. The user might want the privacy to carry on a conversation with other associates out of earshot of the members of the group call. Alternatively, the user might be the member of several group calls, and may want to monitor these calls without disrupting the calls by increasing the noise level as he or she enters and exits the groups.

If the user of the unit 86 determines that he or she wants to change from phone mode to radio mode, the user merely depresses the button 98, as represented by an arrow 110 in Fig. 5. Because the radio mode has been selected, it is now relevant to the operation of the unit 86 whether the function select button 100 is also depressed. In Fig. 5, the function select button 100 is in the released state, as represented by an arrow 112, so the unit 86 is in the receiving function like the unit 88, i.e. the signal between the microphone 94 and the transmitter (not shown) is interrupted, and a different signal is transmitted instead, preferably one with little or no noise.

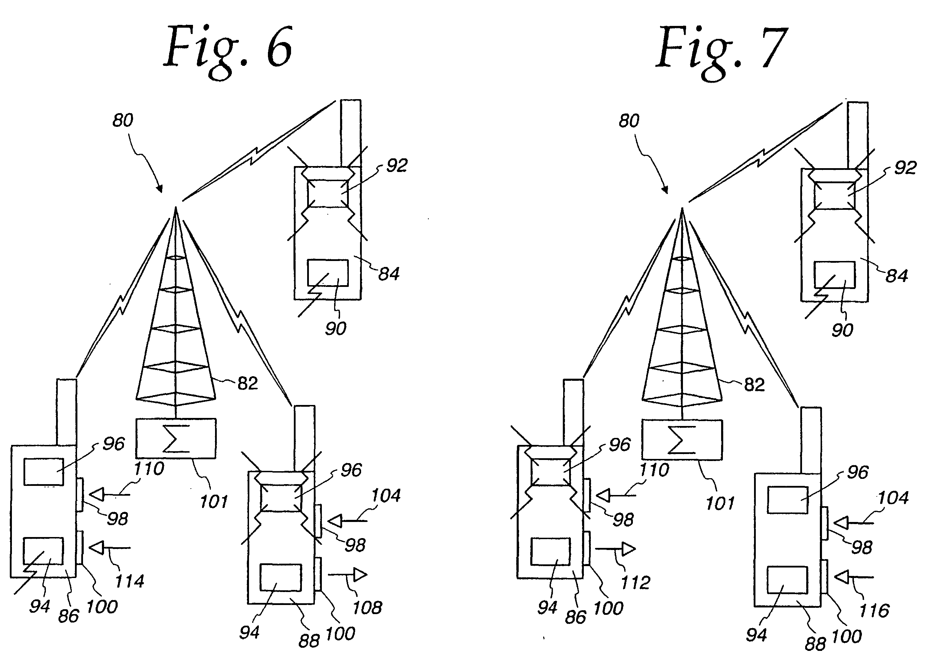

Figs. 6 and 7 show different states of the system 80 with the units 86, 88 both in radio mode. In Fig. 6, the function select button 100 of unit 86 has been depressed, as represented by an arrow 114. As a consequence, the signal between the receiver (not shown) and the speaker 96 of unit 86 is interrupted, and the signal generated by the sounds picked up by the microphone 94 is passed to the transmitter (not shown). The signal is transmitted to the base station 82, wherein it is summed with the signal (null or low-noise) from unit 88 and the signal from unit 84 and broadcast to all units 84, 86, 88. In Fig. 7, the converse situation is shown: the function select button 100 for the unit 88 is depressed (as represented by an arrow 116) and the function select button 100 for the unit 86 is released.

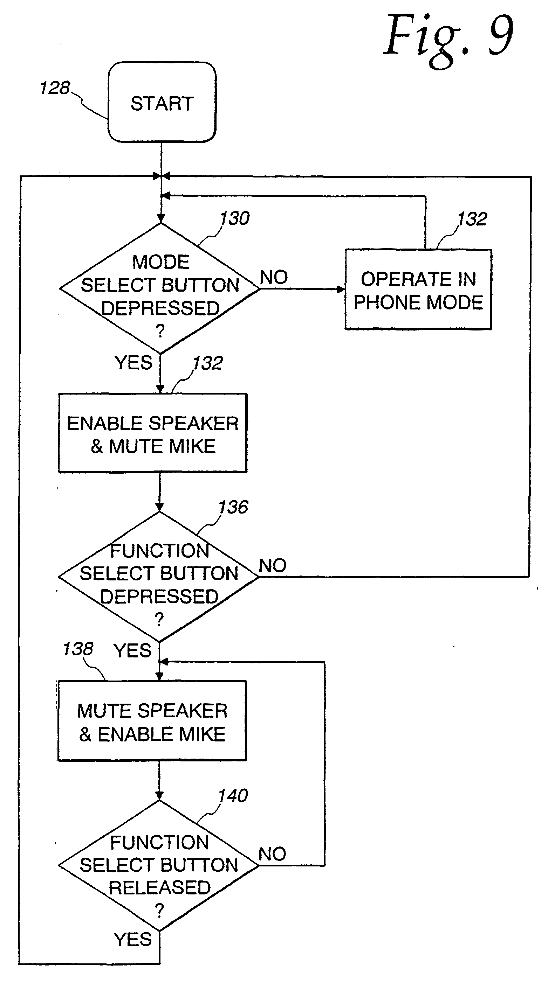

Having this overview of the operation of the system 80, the operation of each of the units 86, 88 is explained with reference to Figs. 8 and 9. Fig. 8 shows the basic structure of the hardware of an embodiment of the units 86, 88, while Fig. 9 shows the operational flow of the software for the units 86, 88.

Referring first to Fig. 8, in addition to the microphone 94, the speaker 96, the mode select button (or switch) 98 and the function select button (or switch) 100, the units 86, 88 include a transmitter/receiver assembly 118 and a processor 120. The processor 120 includes an analog-to-digital:digital-to-analog (A/D:D/A) converter 122, a digital signal processor (or vocoder) 124, and a microprocessor 126. Specifically, the digital signal processor 124 is coupled to the transmitter/receiver assembly 118, the A/D:D/A converter and the microprocessor 126. In turn, the microprocessor 126 is coupled to the buttons 98, 100, and A/D:D/A converter is coupled to the microphone 94 and the speaker 96.

Referring now to Fig. 9, the operation of the units 86, 88 is explained with reference to the structure of Fig. 8. The operation of the units 86, 88 described in Fig. 9 may be thought of as a flow chart of a program which operates within the microprocessor 126 to control the digital signal processor 124 so that the processor 120 may be adapted to perform certain functions in response to signals provided by the microphone 94, the transmitter/receiver assembly 118 and the buttons 98, 100.

After performing routine initialization functions at block 128, the microprocessor 126 determines whether the mode select button 98 has been depressed (at block 130). If the mode select button 98 has not been depressed, then the microprocessor 126 controls the digital signal processor 124 so that the processor 120 is adapted to pass signals between the microphone 94, the speaker 96 and the transmitter/receiver assembly 118 in duplex phone mode (block 132).

In particular, words spoken by the user cause the microphone 94 to generate an analog signal representative thereof. The analog signal is passed to the A/D:D/A converter 122, wherein the signal is converted from an analog form to a digital form (i.e. a series of 1's and 0's; e.g. 100010101010001), also known as the pulse code modulation (PCM) signal, at a bit rate of 64 kilobits per second (converter commonly used. The digitized signal from the converter 122 is then passed to the digital signal processor 124, which codes the digitized signal for transmission at a suitable bit rate (e.g., 8 kBs). The 8 kBs signal is then passed to the transmitter/receiver assembly 118 for transmission to a base station, for example the base station 82.

At the same time, digital signals received by the transmitter/receiver assembly 118 are passed to the digital signal processor 124. The received signals are decoded from an original signal (e.g., at a bit rate of 8 kBs) to obtain a resultant signal (e.g., at a bit rate of 64 kBs). The resultant digital signals are passed to the A/D:D/A converter 122, and an analog signal is generated, to be passed to the speaker 96.

If, however, the microprocessor 126 determines (at block 130) that the mode select button 98 has been depressed, then (at block 134) the microprocessor 126 initially interrupts the signal between the microphone 94 and the transmitter/receiver assembly 118. Specifically, the microprocessor 126 may control the digital signal processor 124 to pass a null (or null sound) signal (i.e. a signal of all 0's; e.g. 0000000000) or a low-noise signal in place of the digitized PCM signal received from the A/D:D/A converter 122. Simultaneously, the microprocessor 126 controls the digital signal processor 124 to pass the signals received by the transmitter/receiver assembly 118 to the speaker 96.

The microprocessor 126 then determines (at block 136) if the function select button 100 has been depressed. If the microprocessor 126 determines that the function select button 100 has not been depressed (i.e., the user does not wish to transmit a signal to the base station), then the microprocessor 126 returns to block 130, and repeats the steps of blocks 130, 134 (and optionally 132) until the microprocessor 126 determines that both the mode select and function select buttons 98, 100 have been depressed.

If the microprocessor 126 determines (at block 136) that both the mode select and function select buttons 98, 100 have been depressed, then (at block 138) according to a preferred embodiment of the invention, the microprocessor 126 controls the digital signal processor 124 to interrupt the signal between the transmitter/receiver assembly 118 and the speaker 96. In particular, the microprocessor 126 may disable that portion of the digital signal processor 124 responsible for decoding the received signal to make the unit appear to be functioning as a half-duplex-like unit. Alternatively, the signal maybe allowed to pass between the transmitter/receiver assembly 118 and the speaker 96. The signals between the microphone 94 and the transmitter/receiver assembly 118 are allowed to pass uninterrupted.

Thereafter, at block 140, the microprocessor 126 determines if the function select button 100 has been released. Until the microprocessor 126 determines that the function select button 100 has been released, the microprocessor 126 continues to interrupt the signal path between the speaker 96 and the transmitter/receiver assembly 118, while allowing signals to pass between the microphone 94 and the assembly 118.

The operation of the system 80 may now be explained again relative to unit 86, with reference to the configurations shown in Figs. 4-7, the structure shown in Fig. 8, and the flow chart shown in Fig. 9. In Fig. 4, the user has not depressed the mode select button 98. As such, the microprocessor 126 determines (at block 130) that the mode select button 98 is not depressed. The microprocessor 126 thus continues to operate the unit 86 in phone mode (through block 132) until the mode select button 98 is depressed.

In Fig. 5, the user has depressed the mode select button 98. The microprocessor 126 determines at block 130 that the mode select button 98 is depressed, and consequently initially interrupts the signals between the microphone 94 and the transmitter/receiver assembly 118, while allowing the signals to pass between the assembly 118 and the speaker 96. Upon determining at block 136 that the function select button 100 is not depressed, the microprocessor 126 repeats the steps 130, 134, 136.

In Fig. 6, the user has depressed the function select button 100. The microprocessor 126 determines (at block 136) that the function select button 100 is depressed, and interrupts the signal path between the speaker 96 and the transmitter/receiver assembly 118, while allowing the signals from the microphone 94 to pass to the assembly 118. The microprocessor 126 further determines (at block 140) that the function select button 140 has not been released, arid continues to perform step 138 until the condition of the function select button 100 changes.

In Fig. 7, the user has released the function select button 100. In response, the microprocessor 126 determines (at block 140) that the button 100 has been released. As a consequence, the microprocessor 126 performs the functions described at blocks 130, 134, 136 until the button 100 is again depressed or the mode select button 98 is released.

The advantages of the above-described units according to the present invention are significant, especially for the group call. Noise proliferation in the group call is limited, while maintaining the option for instantaneous inclusion in the discussion when desired. Furthermore, it is possible to change between the half-duplex like operation and full-duplex operation when desired.

Still other aspects, objects, and advantages of the present invention can be obtained from a study of the specification, the drawings, and the appended claims.

## Claims

1. A radio-communication device (86, 88) comprising a transmitter/receiver assembly (118) adapted to transmit a first radio signal and receive a second radio signal; a microphone (94); a speaker (96); a signal processor (120) adapted to process a first sound signal from the microphone (94) to generate the first radio signal at the transmitter/receiver assembly (118) and to process the second radio signal from the transmitter/receiver assembly (118) to generate a second sound signal at the speaker (96), and; a mode select switch (98) for setectively switching the device between a phone mode and a radio mode; and a function select switch (100) adapted to only operate with the device in the radio mode to selectively control the processor (120) to process the first sound signal to generate the first radios signal comprising a signal representative of the first sound signal in a first functional state, **characterized in that**:
said function select switch (100) selectively controls the processor (120) to process the first sound signal to generate the first radio signal comprising a low-noise signal non-representative of the first sound signal in a second functional state.

2. The device according to claim 1, wherein the function select switch (100) selectively controls the processor (120) to process the first sound signal to generate the first radio signal comprising a null sound signal in the second functional state.

3. The device according to claim 1, wherein the function select switch (100) selectively controls the processor (120) to process the second radio signal to generate the second sound signal in the second functional state, and to disable the processor (120) to prevent generation of the second sound signal in the first functional state.

4. The device according to claim 1, wherein the signal processor (120) comprises:
a digital signal processor (124) adapted to process a first intermediate digital signal to generate the first radio signal and to process the second radio signal to generate a second intermediate digital signal; and
an analog-to-digital:digital-to-analog converter (122) coupled to the digital signal processor (124) and adapted to process the second intermediate digital signal to generate the second sound signal and to process the first sound signal to generate the first intermediate digital signal.

5. The device according to claim 4, wherein the signal processor (120) comprises:
a microprocessor (126) coupled to the digital signal processor, the mode select switch (98) and the function select switch (100),
the microprocessor (126) adapted to control the digital signal processor (124) only in the radio mode to process the first intermediate (digital siginal to generate the first radio signal comprising a signal representative of the first sound signal in a first functional state and to process the first intermediate digital signal to generate the first radio signal comprising a low-noise signal non-representative of the first sound signal in the second functional state.

6. The device according to claim 5, wherein the first and second intermediate digital signals have a bit rate of 64 kilobits per second, and the first and second radio signals have a bit rate of 8 kilobits per second.

7. The device according to claim 1, wherein the signal processor (120) processes the second radio signal to generate the second sound signal and the first sound signal to generate the first radio signal in the phone mode.

8. The device according to claim 6, wherein the signal processor (120) processes the second radio signal to generate the second sound signal substantially simultaneously with the first sound signal to generate the first radio signal in the phone mode.

9. A method of operating a radio-communication device (86, 88) having a speaker (96) and a microphone (94), the method comprising the steps of selecting between a phone mode and a radio mode; selecting, in the radio mode only, between a first functional state and a second functional state; generating a first sound signal at the microphone (94); and generating a first radio signal from the first sound signal, the first radio signal comprising a signal representative of the first sound signal in the first functional state, **characterized in that**:
the first radio signal comprises a low-noise signal non-representative of the first sound signal in the second functional state.

10. The method according to claim 9, wherein the step of generating a first radio signal from the first sound signal comprises generating a first radio signal comprising a null sound signal from the first sound signal in the second functional state.

11. The method according to claim 10, wherein, in the phone mode, the step of generating a first radio signal comprises generating a first radio signal representative of the first sound signal from the first sound signal.

12. The method according to claim 11, further comprising the steps of:
receiving a second radio signal;
generating a second sound signal from the second radio signal in the second functional state but not in the first functional state.

13. The method according to claim 12, further comprising the step of generating a second sound signal from the second radio signal in the phone mode.

14. The method according to claim 9, wherein the first sound signal comprises an analog sound signal, and the step of generating a first radio signal from the first-sound signal comprises the steps of:
generating a first intermediate digital signal from the first sound signal; and
generating a first radio signal from the first intermediate digital signal.

15. The method according to claim 14, wherein the step of generating a first intermediate digital signal comprises the step of generating a first intermediate digital signal having a bit rate of 64 kilobits per second from the first sound signal; and
the step of generating a first radio signal from the first intermediate digital signal comprises the step of generating a first radio signal having a bit rate of 8 kilobits per second from the first intermediate digital signal.

16. The method according to claim 12, wherein the step of generating a second sound signal from the second radio signal comprises the steps of:
generating a second intermediate digital signal from the second radio signal; and
generating a second sound signal from the second intermediate digital signal, wherein the second sound signal comprises an analog sound signal.

17. The method according to claim 16, wherein the second radio signal comprises a radio signal having a bit rate of 8 kilobits per second, and the step of generating an intermediate digital signal from the second radio signal comprises generating a second intermediate digital signal having a bit rate of 64 kilobits per second from the second radio signal.

18. The method according to claim 9, wherein the step of selecting between a phone mode and radio mode comprises the step of selecting between a phone mode and a radio mode only with the device in the phone mode or the first functional state of the radio mode.

## Patentansprüche

1. Funkkommunikationsvorrichtung (86, 88), umfassend eine zum Senden eines ersten Funksignals und Empfangen eines zweiten Funksignals ausgelegte Sender-/Empfänger-Anordnung (118); ein Mikrofon (94); einen Lautsprecher (96); einen Signalprozessor (120), der dafür ausgelegt ist, ein erstes Schallsignal vom Mikrofon (94) zu verarbeiten, um das erste Funksignal an der Sender-/Empfänger-Anordnung (118) zu erzeugen; und das zweite Funksignal von der Sender-/Empfänger-Anordnung (118) zu verarbeiten, um ein zweites Schallsignal am Lautsprecher (96) zu erzeugen; und einen Modusauswahlschalter (98) zum selektiven Umschalten der Vorrichtung zwischen einem Telefonmodus und einem Funkmodus; und einen nur zur Bedienung der Vorrichtung im Funkmodus ausgelegten Funktionsauswahlschalter (100) zur selektiven Steuerung des Prozessors (120), zur Verarbeitung des ersten Schallsignals, um das erste Funksignal zu erzeugen, welches ein Signal aufweist, das repräsentativ für das erste Schallsignal in einem ersten funktionalen Zustand ist, **dadurch gekennzeichnet, dass**
der Funktionsauswahlschalter (100) selektiv den Prozessor (120) steuert, um das erste Schallsignal zu verarbeiten, um das erste Funksignal zu erzeugen, welches ein rauscharmes Signal aufweist, das nicht repräsentativ für das erste Schallsignal in einem zweiten funktionalen Zustand ist.

2. Vorrichtung gemäß Anspruch 1, wobei der Funktionsauswahlschalter (100) den Prozessor (120) selektiv steuert, um das erste Schallsignal zu verarbeiten, um das erste Funksignal zu erzeugen, welches ein Null-Schallsignal im zweiten funktionalen Zustand umfasst.

3. Vorrichtung gemäß Anspruch 1, wobei der Funktionsauswahlschalter (100) den Prozessor (120) selektiv steuert, um das zweite Funksignal zu verarbeiten, um das zweite Schallsignal im zweiten funktionalen Zustand zu erzeugen, und um den Prozessor (120) abzuschalten, um die Erzeugung des zweiten Schallsignals im ersten funktionalen Zustand zu verhindern.

4. Vorrichtung gemäß Anspruch 1, wobei der Signalprozessor (120) umfasst:
einen digitalen Signalprozessor (124), der dafür ausgelegt ist, ein erstes intermediäres Digitalsignal zu verarbeiten, um das erstes Funksignal zu erzeugen, und das zweite Funksignal zu verarbeiten, um ein zweites intermediäres Digitalsignal zu erzeugen; und
einen Analog/Digital- und Digital/Analog-Wandler (122), der an den digitalen Signalprozessor (124) gekoppelt und dafür ausgelegt ist, das zweite intermediäre Digitalsignal zu verarbeiten, um das zweite Schallsignal zu erzeugen, und das erste Schallsignal zu verarbeiten, um das erste intermediäre Digitalsignal zu erzeugen.

5. Vorrichtung gemäß Anspruch 4, wobei der Signalprozessor (120) umfasst:
einen Mikroprozessor (126), der an den digitalen Signalprozessor, den Modusauswahlschalter (98) und den Funktionsauswahlschalter (100) gekoppelt ist,
wobei der Mikroprozessor (126) dafür ausgelegt ist, den digitalen Signalprozessor (124) nur im Funkmodus zu steuern, um das erste intermediäre Digitalsignal zu verarbeiten, um das erste Funksignal zu erzeugen, das ein Signal aufweist, das repräsentativ für das erste Schallsignal in einem ersten funktionalen Zustand ist, und um das erste intermediäre Digitalsignal zu verarbeiten, um das erste Funksignal zu erzeugen, das ein rauscharmes Signal umfasst, das nicht repräsentativ für das erste Schallsignal im zweiten funktionalen Zustand ist.

6. Vorrichtung gemäß Anspruch 5, wobei die ersten und zweiten intermediären Digitalsignale eine Bitrate von 64 kBits/s haben, und die ersten und zweiten Funksignale eine Bitrate von 8 kBits/s haben.

7. Vorrichtung gemäß Anspruch 1, dadurch wobei der Signalprozessor (120) das zweite Funksignal verarbeitet, um das zweite Schallsignal zu erzeugen und das erste Schallsignal verarbeitet, um das erste Funksignal im Telefonmodus zu erzeugen.

8. Vorrichtung gemäß Anspruch 6, wobei der Signalprozessor (120) das zweite Funksignal verarbeitet, um das zweite Schallsignal im wesentlichen gleichzeitig mit dem ersten Schallsignal zu erzeugen, um das erste Funksignal im Telefonmodus zu erzeugen.

9. Verfahren zum Betrieb einer Funkkommunikationsvorrichtung (86, 88) mit einem Lautsprecher (96) und einem Mikrofon (94), wobei das Verfahren die Schritte umfasst: Auswählen zwischen einem Telefonmodus und einem Funkmodus; nur im Funkmodus Auswählen zwischen einem ersten funktionalen Zustand und einem zweiten funktionalen Zustand; Erzeugen eines ersten Schallsignals am Mikrofon (94); und Erzeugen eines ersten Funksignals aus dem ersten Schallsignal, wobei das erste Funksignal ein Signal aufweist, das repräsentativ für das erste Schallsignal in einem ersten funktionalen Zustand ist, **dadurch gekennzeichnet, dass**
das erste Funksignal ein rauscharmes Signal aufweist, das nicht repräsentativ für das erste Schallsignal im zweiten funktionalen Zustand ist.

10. Verfahren gemäß Anspruch 9, wobei der Schritt des Erzeugens eines ersten Funksignals aus dem ersten Schallsignal das Erzeugen eines ersten, ein Null-Schallsignal umfassenden Funksignals aus dem ersten Schallsignal im zweiten funktionalen Zustand umfasst.

11. Verfahren gemäß Anspruch 10, wobei im Telefonmodus der Schritt des Erzeugens eines ersten Funksignals das Erzeugen eines ersten Funksignals aus dem ersten Schallsignal umfasst, welches repräsentativ für das erste Schallsignal ist.

12. Verfahren gemäß Anspruch 11, weiterhin umfassend die Schritte:
Empfangen eines zweiten Funksignals;
Erzeugen eines zweiten Schallsignals aus dem zweiten Funksignals im zweiten funktionalen Zustand, aber nicht im ersten funktionalen Zustand.

13. Verfahren gemäß Anspruch 12, weiterhin umfassend den Schritt des Erzeugens eines zweiten Schallsignals aus dem zweiten Funksignal im Telefonmodus.

14. Verfahren gemäß Anspruch 9, wobei das erste Schallsignal ein analoges Schallsignal enthält, und der Schritt des Erzeugens eines ersten Funksignals aus dem ersten Schallsignal die Schritte umfasst:
Erzeugen eines ersten intermediären Digitalsignals aus dem ersten Schallsignal; und
Erzeugen eines ersten Funksignals aus dem ersten intermediären Digitalsignal.

15. Verfahren gemäß Anspruch 14, wobei der Schritt des Erzeugens eines ersten intermediären Digitalsignals den Schritt des Erzeugen eines ersten intermediären Digitalsignals mit einer Bitrate von 64 kBit/s aus dem ersten Schallsignal umfasst; und
dass der Schritt des Erzeugens eines ersten Funksignals aus dem ersten intermediären Digitalsignal den Schritt des Erzeugens eines ersten Funksignals mit einer Bitrate von 8 kBit/s aus dem ersten intermediären Digitalsignal umfasst.

16. Verfahren gemäß Anspruch 12, wobei der Schritt des Erzeugens eines zweiten Schallsignals aus dem zweiten Funksignal die Schritte umfasst:
Erzeugen eines zweiten intermediären Digitalsignals aus dem zweiten Funksignal; und
Erzeugen eines zweiten Schallsignals aus dem zweiten intermediären Digitalsignal, wobei das zweite Schallsignal ein analoges Schallsignal aufweist.

17. Verfahren gemäß Anspruch 16, wobei das zweite Funksignal ein Funksignal mit einer Bitrate von 8 kBit/s umfasst, und dass der Schritt des Erzeugens eines intermediären Digitalsignals aus dem zweiten Funksignal das Erzeugen eines zweiten intermediären Digitalsignals mit einer Bitrate von 64 kBit/s aus dem zweiten Funksignal umfasst.

18. Verfahren gemäß Anspruch 9, wobei der Schritt des Auswählens zwischen einem Telefonmodus und einem Funkmodus den Schritt des Auswählens zwischen einem Telefonmodus und einem Funkmodus nur umfasst, wenn die Vorrichtung im Telefonmodus oder im ersten funktionalen Zustand des Funkmodus ist.

## Revendications

1. Dispositif (86, 88) de communication par radio comprenant un ensemble émetteur-récepteur (118) conçu pour émettre un premier signal radio et pour recevoir un second signal radio ; un microphone (94) ; un écouteur (96) ; un processeur (120) de signal conçu pour traiter un premier signal sonore provenant du microphone (94) pour engendrer un premier signal radio au niveau de l'ensemble émetteur-récepteur (118) et pour traiter le second signal radio provenant de l'ensemble émetteur-récepteur (118) pour engendrer un second signal sonore au niveau de l'écouteur (96), et ; un commutateur (98) de choix de mode pour faire basculer sélectivement le dispositif entre un mode téléphone et un mode radio ; et un commutateur (100) de choix de fonction conçu pour opérer seulement avec le dispositif en mode radio pour commander sélectivement le processeur (120) pour traiter le premier signal sonore pour engendrer le premier signal radio comprenant un signal représentatif du premier signal sonore dans un premier état fonctionnel, **caractérisé :**
**en ce que** ledit commutateur (100) de choix de fonction commande sélectivement le processeur (120) pour traiter le premier signal sonore pour engendrer le premier signal radio comprenant un signal à faible bruit non représentatif du premier signal sonore dans un second état fonctionnel.

2. Dispositif selon la revendication 1, dans lequel le commutateur (100) de choix de fonction commande sélectivement le processeur (120) pour traiter le premier signal sonore pour engendrer le premier signal radio comprenant un signal de son nul dans le second état fonctionnel.

3. Dispositif selon la revendication 1, dans lequel le commutateur (100) de choix de fonction commande sélectivement le processeur (120) pour traiter le second signal radio pour engendrer le second signal sonore dans le second état fonctionnel, et pour désactiver le processeur (120) pour empêcher la production du second signal sonore dans le premier état fonctionnel.

4. Dispositif selon la revendication 1, dans lequel le processeur de signal (120) comprend :
un processeur (124) de signal numérique conçu pour traiter un premier signal numérique intermédiaire pour engendrer le premier signal radio et pour traiter le second signal radio pour engendrer un second signal numérique intermédiaire ; et
un convertisseur (122) d'analogique en numérique : de numérique en analogique associé au processeur (124) de signal numérique et conçu pour traiter le second signal numérique intermédiaire pour engendrer le second signal sonore et pour traiter le premier signal sonore pour engendrer le premier signal numérique intermédiaire.

5. Dispositif selon la revendication 4, dans lequel le processeur (120) de signal comprend :
un microprocesseur (126) associé au processeur de signal numérique, au commutateur (98) de choix de mode et au commutateur (100) de choix de fonction ;
le microprocesseur (126) étant conçu pour commander le processeur (124) de signal numérique seulement en mode radio pour traiter le premier signal numérique intermédiaire pour engendrer le premier signal radio comprenant un signal représentatif du premier signal sonore dans un premier état fonctionnel, et pour traiter le premier signal numérique intermédiaire pour engendrer le premier signal radio comprenant un signal à faible bruit non représentatif du premier signal sonore dans le second état fonctionnel.

6. Dispositif selon la revendication 5, dans lequel les premier et second signaux numériques intermédiaires ont un débit binaire de 64 kilobits par seconde, et les premier et second signaux radio ont un débit binaire de 8 kilobits par seconde.

7. Dispositif selon la revendication 1, dans lequel le processeur (120) de signal traite le second signal radio pour engendrer le second signal sonore et le premier signal sonore pour engendrer le premier signal radio en mode téléphone.

8. Dispositif selon la revendication 6, dans lequel le processeur (120) de signal traite le second signal radio pour engendrer le second signal sonore sensiblement simultanément avec le premier signal sonore pour engendrer le premier signal radio en mode téléphone.

9. Procédé de mise en oeuvre d'un dispositif (86, 88) de communication par radio comportant un écouteur (96) et un microphone (94), le procédé comprenant les étapes consistant à choisir entre un mode téléphone et un mode radio ; à choisir, en mode radio seulement, entre un premier état fonctionnel et un second état fonctionnel ; à engendrer un premier signal sonore au niveau du microphone (94) ; et à engendrer un premier signal radio à partir du premier signal sonore, le premier signal radio comprenant un signal représentatif du premier signal sonore dans le premier état fonctionnel, **caractérisé :**
**en ce que** le premier signal radio comprend un signal à faible bruit non représentatif du premier signal sonore dans le second état fonctionnel.

10. Procédé selon la revendication 9, dans lequel l'étape de production d'un premier signal radio à partir du premier signal sonore comprend la production d'un premier signal radio comprenant un signal de son nul à partir du premier signal sonore dans le second état fonctionnel.

11. Procédé selon la revendication 10, dans lequel, en mode téléphone, l'étape de production d'un premier signal radio comprend la production d'un premier signal radio représentatif du premier signal sonore à partir du premier signal sonore.

12. Procédé selon la revendication 11, comprenant en outre les étapes consistant :
à recevoir un second signal radio ;
à engendrer un second signal sonore à partir du second signal radio dans le second état fonctionnel mais pas dans le premier état fonctionnel.

13. Procédé selon la revendication 12, comprenant en outre l'étape consistant à engendrer un second signal sonore à partir du second signal radio en mode téléphone.

14. Procédé selon la revendication 9, dans lequel le premier signal sonore comprend un signal sonore analogique, et l'étape de production d'un premier signal radio à partir du premier signal sonore comprend les étapes consistant :
à engendrer un premier signal numérique intermédiaire à partir du premier signal sonore ; et
à engendrer un premier signal radio à partir du premier signal numérique intermédiaire.

15. Procédé selon la revendication 14, dans lequel l'étape de production d'un premier signal numérique intermédiaire comprend l'étape consistant à engendrer un premier signal numérique intermédiaire ayant un débit binaire de 64 kilobits par seconde à partir du premier signal sonore ; et
dans lequel l'étape de production d'un premier signal radio à partir du premier signal numérique intermédiaire comprend l'étape de production d'un premier signal radio ayant un débit binaire de 8 kilobits par seconde à partir du premier signal numérique intermédiaire.

16. Procédé selon la revendication 12, dans lequel l'étape de production d'un second signal sonore à partir du second signal radio comprend les étapes consistant :
à engendrer un second signal numérique intermédiaire à partir du second signal radio ; et
à engendrer un second signal sonore à partir du second signal numérique intermédiaire, dans lequel le second signal sonore comprend un signal sonore analogique.

17. Procédé selon la revendication 16, dans lequel le second signal radio comprend un signal radio ayant un débit binaire de 8 kilobits par seconde, et dans lequel l'étape de production d'un signal numérique intermédiaire à partir du second signal radio comprend la production d'un second signal numérique intermédiaire ayant un débit binaire de 64 kilobits par seconde à partir du second signal radio.

18. Procédé selon la revendication 9, dans lequel l'étape de choix entre un mode téléphone et un mode radio comprend l'étape de choix entre un mode téléphone et un mode radio seulement avec le dispositif en mode téléphone ou dans le premier état fonctionnel du mode radio.
